# EUROPEAN PATENT APPLICATION

(11) **EP 4 258 153 A1**
(43) Date of publication of application: **11.10.2023**
(21) Application number: 20934447.2
(22) Date of filing: 08.12.2020
(51) Int. Cl.: G06F 30/13, G06F 30/23

(54) **METHOD, APPARATUS AND DEVICE FOR TRANSFERRING GRID DATA OF FINITE ELEMENT MODEL FOR NUCLEAR ISLAND STRUCTURE**

(30) Priority: 23.09.2020 CN 202011007103
(71) Applicant: China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: LV, Jinquan, Shenzhen, Guangdong 518124 (CN); DONG, Zhanfa, Shenzhen, Guangdong 518124 (CN); JIA, Jianying, Shenzhen, Guangdong 518124 (CN); ZHANG, Tao, Shenzhen, Guangdong 518124 (CN); WU, Jianhua, Shenzhen, Guangdong 518124 (CN); DAI, Weiying, Shenzhen, Guangdong 518124 (CN); LIU, Chunguang, Shenzhen, Guangdong 518124 (CN); ZHOU, Yanbing, Shenzhen, Guangdong 518124 (CN); ZHAO, Ming, Shenzhen, Guangdong 518124 (CN); DING, Zhixin, Shenzhen, Guangdong 518124 (CN)
(74) Representative: Greaves Brewster LLP
(86) International application number: PCT/CN2020/134586
(87) International publication number: WO 2021/223434

(57) **Abstract**

The present invention provides a method, apparatus and device for transferring grid data of a finite element model for a nuclear island structure. The method for transferring grid data of a finite element model for a nuclear island structure include the steps of: generating a sub-model according to localized objects and components connected to the localized objects within a certain range; acquiring data of an overall model in which the sub-model is located; for each sub-model unit in the sub-model, acquiring a real constant serial number of the sub-model and a number of overall model units having real constant serial numbers consistent with the real constant serial number of each sub-model unit, in the overall model; determining a target overall model unit according to the distances between the sub-model unit and centroid points of the number of overall model units; and transferring the integral load effect of the target overall model unit to the corresponding sub-model unit. According to the present invention, the integral load effect calculated by an overall model with a relatively large cell grid size at a preliminary design stage is mapped into a sub-model with a small cell grid size at a detailed design stage, the integral load effect is combined with a localized load effect analyzed by the sub-model, to obtain a combined load effect for a structural design, so that the calculation precision and the calculation efficiency are both taken into consideration.

## Description

### FIELD OF THE INVENTION

The present invention generally relates to the field of civil structure design of nuclear power plant and, more particularly, relates to a method, apparatus and device for transferring grid data of a finite element model for nuclear island structure.

### BACKGROUND OF THE INVENTION

The structure of nuclear island is complex and huge. The finite element model for structural mechanics analysis of nuclear island has hundred thousand units and more than one million nodes. The loads not only include the integral load considered in the preliminary design stage, such as earthquake, wind load, tornado load, external explosion and temperature action, but also include local loads considered during the detailed design stage, such as gravity loads, room pressure loads, or injection loads caused by pipe ruptures, and the loads of the two design stages should consider the possible combination of the simultaneous loads.

In calculation of the integral load effect in the preliminary design stage, a finite element model with large unit grid size can satisfy the calculation precision. For the calculation of time-consuming load, especially for earthquake, the workstation computer in the prior art is still computable. In the detailed design stage, small unit grid size is often required to ensure the accuracy of local load effect. In order to combine the overall load effect calculated by the finite element model with large unit grid size in the preliminary design stage with the local load effect calculated by the finite element model with small unit grid size in the detailed design stage, it is necessary to solve the problem of how to map the overall load effect calculated by the finite element model with large unit grid size into the finite element model with small unit grid size. If the finite element model of small unit grid size is used to re-calculate the earthquake action considered in the preliminary design stage, the prior art computer resources cannot complete the calculation due to the huge number of elements.

In the detailed design of the existing nuclear island civil structure, in order to avoid mapping the overall load effect calculated by the finite element model of large unit grid size in the preliminary design stage of nuclear island to the finite element model of small unit grid size in the detailed design stage, the object to be designed in detail, such as a floor, the finite element calculation and analysis model of the small unit grid size of the object shall be established, the area of reinforcement produced by local effect and the area of reinforcement produced by overall load effect are superposed according to certain weight, to act as the basis of construction drawing design.

However, the prior art as discussed above has the following disadvantage. The calculation of reinforcement area by using reinforcement area superposition instead of load effect combination does not conform to the normal design logic and cannot guarantee the safety and reliability of the design.

### SUMMARY OF THE INVENTION

In view of the disadvantages in the prior art as mentioned above, one object of the present invention is to provide a method, apparatus and device for transferring grid data of a finite element model for nuclear island structure, in which the integral load effect calculated by the overall model of large unit grid size in the preliminary design stage is mapped to the sub-model of small unit grid size in the detailed design stage, and combined with the local load effect of the sub-model analysis, to obtain the combined load effect for structural design, thereby taking the calculation accuracy and calculation efficiency into account.

According to one embodiment of the present invention, a method for transferring grid data of a finite element model for a nuclear island structure includes the steps of:
generating a sub-model according to localized objects to be detailly designed and components connected to the localized objects within a certain range, in which the sub-model is a finite element model with a first unit grid size;
acquiring data of an overall model in which the sub-model is located, wherein the overall model is a finite element model established with a second unit grid size larger than the first unit grid size, and the data of the overall model includes an integral load effect of each overall model unit of the overall model;
for each sub-model unit in the sub-model, acquiring a real constant serial number of each sub-model unit, and a number of overall model units having real constant serial numbers consistent with the real constant serial number of each sub-model unit in the overall model;
determining a target overall model unit according to distances between the sub-model unit and centroid points of the plurality of overall model units;
transferring the integral load effect of the target overall model unit to the corresponding sub-model unit.

According to one aspect of the present invention, the step of determining a target overall model unit according to distances between the sub-model unit and centroid points of the plurality of overall model units includes the step of:
calculating the distances between the sub-model unit and the centroid points of the number of overall model units respectively, and taking the overall model unit closest to the centroid points as the target overall model unit.

According to one aspect of the present invention, the step of transferring the integral load effect of the target overall model unit to the corresponding sub-model unit includes the steps of:
calculating a sum area S 1 of a number of sub-model units each having a real constant serial number consistent with the constant serial number of the sub-model unit;
calculating a sum area S2 of a number of overall model units each having a real constant serial number consistent with the constant serial number of the sub-model unit;
multiplying the integral load effect of the target overall model unit by a transfer coefficient (S₂/ S₁) and transmitting the product to the sub-model unit.

According to one aspect of the present invention, after transferring the integral load effect of the target overall model unit to the corresponding sub-model unit, the method for transferring grid data of a finite element model for a nuclear island structure further includes the step of:
combining original local load effect of the sub-model unit with the overall load effect to obtain a combined load effect, and performing structural designing according to the combined load effect.

According to another embodiment of the present invention, an apparatus for transferring grid data of a finite element model for a nuclear island structure includes:
a sub-model generating module for generating a sub-model according to localized objects to be detailly designed and components connected to the localized objects within a certain range, wherein the sub-model is a finite element model with a first unit grid size;
an overall model acquiring module for acquiring data of an overall model in which the sub-model is located, wherein the overall model is a finite element model established with a second unit grid size larger than the first unit grid size, and the data of the overall model comprises an integral load effect of each overall model unit of the overall model;
an overall model units acquiring module for acquiring a real constant serial number of each sub-model unit in the sub-model, and a plurality of overall model units having real constant serial numbers consistent with the real constant serial number of each sub-model unit in the overall model;
a distance determining module for determining a target overall model unit according to distances between the sub-model unit and centroid points of the number of overall model units; and
a data transferring module for transferring the integral load effect of the target overall model unit to the corresponding sub-model unit.

According to one aspect of the present invention, the distance determining module is used for:
calculating the distances between the sub-model unit and the centroid points of the number of overall model units respectively, and taking the overall model unit closest to the centroid points as the target overall model unit.

According to one aspect of the present invention, the data transferring module is used for:
calculating a sum area S1 of a plurality of sub-model units each having a real constant serial number consistent with the constant serial number of the sub-model unit;
calculating a sum area S2 of a plurality of overall model units each having a real constant serial number consistent with the constant serial number of the sub-model unit; and
multiplying the integral load effect of the target overall model unit by a transfer coefficient (S₂/ S₁) and transmitting the product to the sub-model unit.

According to one aspect of the present invention, the apparatus for transferring grid data of a finite element model for a nuclear island structure also includes:
a combining module for combining original local load effect of the sub-model unit with the overall load effect to obtain a combined load effect, and performing structural designing according to the combined load effect.

According to one aspect of the present invention, the sub-model is a collection of components in a local scope of the overall model in geometric space.

According to yet another embodiment of the present invention, a device for transferring grid data of a finite element model for a nuclear island structure includes a memory having a computer program stored therein and a processor, the computer program can be executed by the processor to perform the method for transferring grid data of a finite element model for a nuclear island structure of the present invention.

According to the embodiments of the method, apparatus and device for transferring grid data of a finite element model for nuclear island structure of the present invention, the integral load effect calculated by an overall model with a relatively large cell grid size at a preliminary design stage is mapped into a sub-model with a small cell grid size at a detailed design stage, the integral load effect is combined with a localized load effect analyzed by the sub-model, to obtain a combined load effect for a structural design, so that the calculation precision and the calculation efficiency are both taken into consideration and the design accuracy is ensured.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 is a flow chart of a method for transferring grid data of a finite element model for nuclear island structure according to a first embodiment of the present invention;
Fig. 2 is an illustrative diagram of data transfer between an overall model and a sub-model;
Fig. 3 is an illustrative diagram showing relationship between the overall model and the sub-model;
Fig. 4 is an illustrative diagram of acquiring the target overall model unit;
Fig. 5 is a diagram showing comparison of the calculated results after the data transfer;
Fig. 6 is block diagram of an apparatus for transferring grid data of a finite element model for nuclear island structure according to the first embodiment of the present invention.

### DETAILED DESCRIPTION OF THE INVENTION

The technical solution of the embodiments of the present invention will be described clearly and completely in view of the attached drawings, in which only part of not all embodiments of the present invention are shown. Based on the embodiments of the present invention as described, other embodiments obtained by one ordinary skilled in the art without creative work fall within the scope of the present invention.

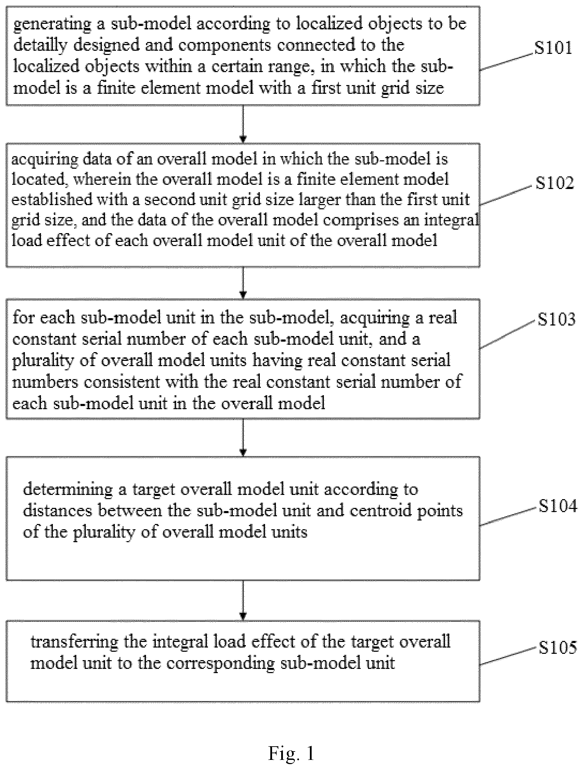

Referring to Fig. 1, the first embodiment of the present invention provides a method for transferring grid data of a finite element model for nuclear island structure, which can be performed by a device for transferring grid data of a finite element model for nuclear island structure, at least includes the steps of:
5101, generating a sub-model according to localized objects to be detailly designed and components connected to the localized objects within a certain range, in which the sub-model is a finite element model with a first unit grid size.

In the present embodiment, the detailly designed local object and components in peripheral region thereof are both taken as the analysis objects, and the boundary conditions of the detailly designed local object are simulated accurately, so that the calculation results are accurate and reliable.

S102, acquiring data of an overall model in which the sub-model is located, wherein the overall model is a finite element model established with a second unit grid size larger than the first unit grid size, and the data of the overall model comprises an integral load effect of each overall model unit of the overall model.

In the present embodiment, the device for transferring grid data of a finite element model for nuclear island structure (hereinafter referred as data transfer device) can be a notebook computer, a desktop computer, a workstation, a server or other computing devices which have data processing capabilities. All the steps of the present embodiment can be realized by installing predetermined software in the data transfer device.

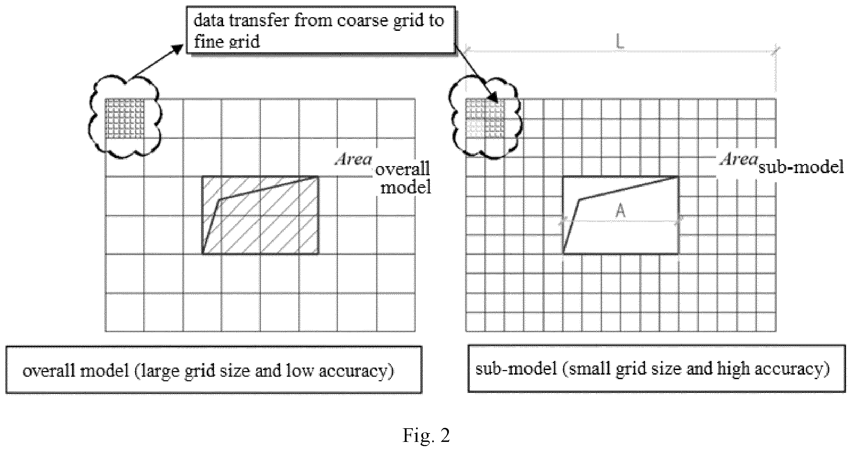

Referring to Fig. 2, in the present embodiment, the overall model may be a finite element model of a complete nuclear island structure. The overall model may have hundred thousand elements and more than one million nodes, Because of the calculation of the integral load effect in the preliminary design stage, the finite element model with large unit grid size can usually meet the requirements of calculation accuracy.

In the present embodiment, the sub-model is a finite element model of a partial structure in the nuclear island structure. During the detailed design stage, the gravity load, room pressure load or the injection load caused by the pipe break need to be considered. In order to ensure the accuracy of the calculation of the local load effect, a smaller unit grid size is required. Therefore, in the present embodiment, the first unit grid size of the sub-model is smaller than the second unit grid size of the overall model. However, the overall model contains more nodes than the sub-model, so even if the sub-model of the finite element model is more precise, the amount of calculation is still within an acceptable range.

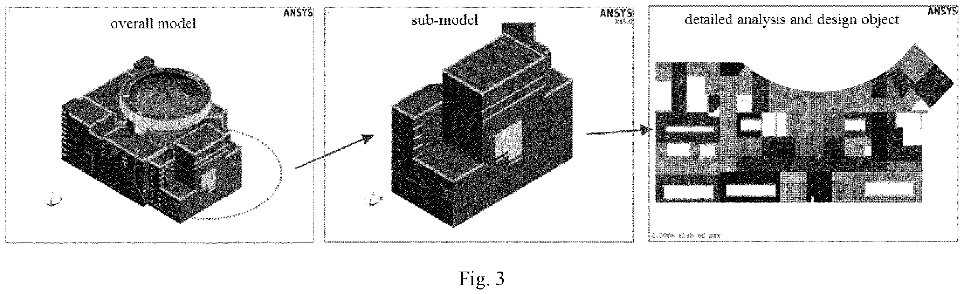

Referring to Fig. 3, the left side of Fig. 3 is the finite element model of the architectural complex of the nuclear island plant, namely the overall model. The middle of Fig. 3 is the finite element model of a sub-plant in the nuclear island plant architectural complex, namely the sub-model. The right in Fig. 3 is the object for detailed design in the sub-plant, i.e. a floor. As can be seen from Fig. 3, the sub-model is a collection of components in a local scope of the overall model in geometric space.

In the present embodiment, the real constant is a parameter that defines the geometric size of components such as wallboard in ANSYS software, and the content of the real constant defined by different real constant numbers can be the same or different. In the present embodiment, different real constant numbers are used in the design to classify components. For example, one floor is 200mm thick, this floor has different rooms, each room number can be understood as a real constant number, but the information corresponding to the real numbers is about the 200mm thickness of the floor.

In the present embodiment, the spatial position and real constant number of each component in the sub-model are consistent with the corresponding information of the corresponding component in the overall model. The only difference lies in that the unit size of the simulated component is more precise than that of the overall model, that is, the unit grid size is smaller.

S103, for each sub-model unit in the sub-model, acquiring a real constant serial number of each sub-model unit, and a plurality of overall model units having real constant serial numbers consistent with the real constant serial number of each sub-model unit in the overall model.

S 104, determining a target overall model unit according to distances between the sub-model unit and centroid points of the plurality of overall model units.

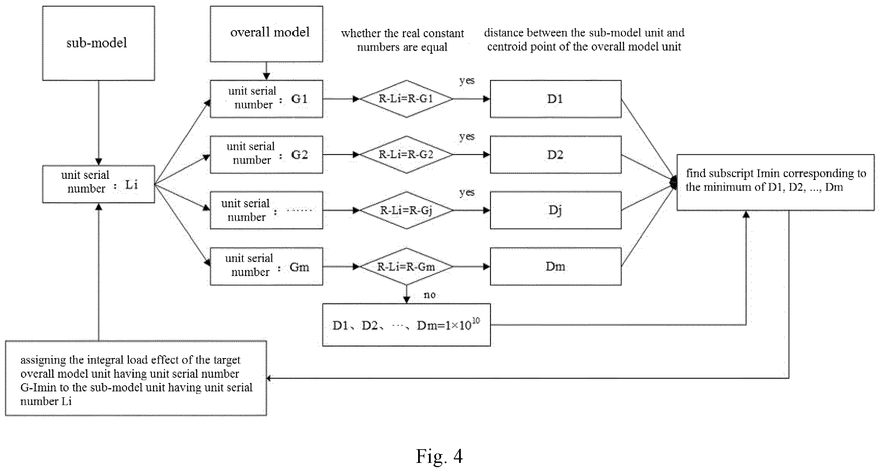

Referring to Fig. 4, in the present embodiment, for a sub-model unit with a predetermined real constant number, there are a number of overall model units with the same real constant number in the overall model. Via searching for the real constant numbers in the data of the overall model, the overall model units with the same real constant numbers can be found.

In the present embodiment, after obtaining a number of overall model units after searching, the distance between the sub-model unit and the centroid points of the number of overall model units is first calculated respectively, and the overall model unit closest to the centroid points is taken as the target overall model unit. As shown in Fig. 2, the sum area S1 of a number of sub-model units each having a real constant serial number consistent with the constant serial number of the sub-model unit and the sum area and S2 of a number of overall model units each having a real constant serial number consistent with the constant serial number of the sub-model unit are calculated, and the transfer coefficient S₂/S₁ is obtained.

As mentioned above, it is assumed that a room with a certain number has the same real constant number in the overall model and the sub-model, but with different unit grid sizes. Because of the deepening of the design, a new hole may be opened in the room and the hole is only reflected in the sub-model. In order to ensure that the data transferring of the overall model takes the hole in consideration, a transfer coefficient is generated according to the area ratio.

In the present embodiment, the area sum of the number of sub-model units corresponding to the real constant number of the sub-model units and the area sum of a number of overall model units corresponding to the real constant number of the sub-model units can be obtained directly in the software.

S105, transferring the integral load effect of the target overall model unit to the corresponding sub-model unit.

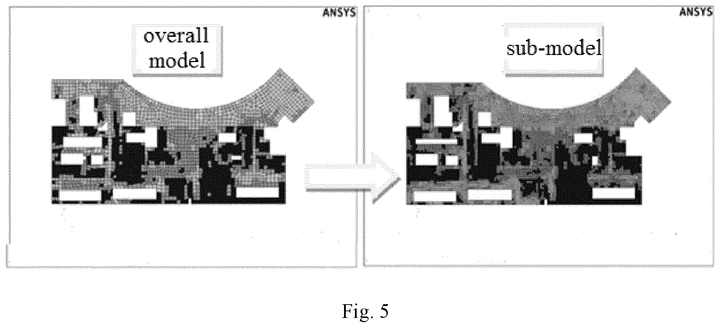

Referring to Fig. 5, in the present embodiment, the combined load effect is obtained via obtaining the target overall model unit and the transfer coefficient, multiplying the integral load effect of the target overall model unit by the transfer coefficient to produce the integral load effect transmitted from the overall model to the sub-model, and combining the original local load effect of the sub-model unit with the integral load effect.

In the present embodiment, after the combined load effect is obtained, relevant design can be carried out, such as reinforcement calculation, crack width checking and deformation checking.

In view of the foregoing, according to the method for transferring grid data of a finite element model for nuclear island structure of the present embodiment, the integral load effect calculated by an overall model with a relatively large cell grid size at a preliminary design stage is mapped into a sub-model with a small cell grid size at a detailed design stage, the integral load effect is combined with a localized load effect analyzed by the sub-model, to obtain a combined load effect for a structural design, so that the calculation precision and the calculation efficiency are both taken into consideration and the design accuracy is ensured.

In addition, during establishing the sub-module, the detailly designed local object and the structure of the surrounding region of the local object are incorporated into the analysis object, the boundary conditions of the local object are simulated accurately, and the calculation results are accurate and reliable.

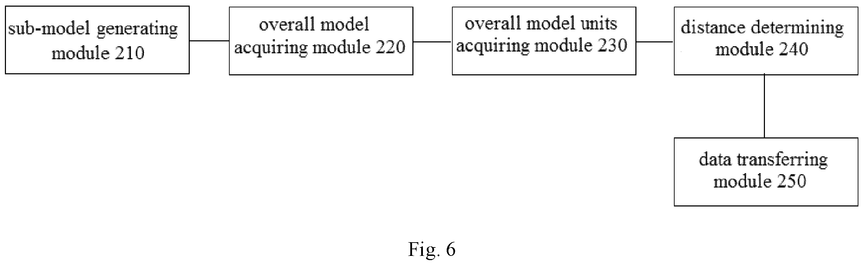

Referring to Fig. 6, a second embodiment of the present invention provides an apparatus for transferring grid data of a finite element model for a nuclear island structure including:
a sub-model generating module 210 for generating a sub-model according to localized objects to be detailly designed and components connected to the localized objects within a certain range, wherein the sub-model is a finite element model with a first unit grid size;
an overall model acquiring module 220 for acquiring data of an overall model in which the sub-model is located, wherein the overall model is a finite element model established with a second unit grid size larger than the first unit grid size, and the data of the overall model comprises an integral load effect of each overall model unit of the overall model;
an overall model units acquiring module 230 for acquiring a real constant serial number of each sub-model unit in the sub-model, and a plurality of overall model units having real constant serial numbers consistent with the real constant serial number of each sub-model unit in the overall model;
a distance determining module 240 for determining a target overall model unit according to distances between the sub-model unit and centroid points of the number of overall model units;
a data transferring module 250 for transferring the integral load effect of the target overall model unit to the corresponding sub-model unit.

Preferably, the distance determining module 240 is specifically used for:
calculating the distances between the sub-model unit and the centroid points of the plurality of overall model units respectively, and taking the overall model unit closest to the centroid points as the target overall model unit.

Preferably, the data transferring module 250 is specifically used for:
calculating a sum area S1 of a plurality of sub-model units each having a real constant serial number consistent with the constant serial number of the sub-model unit;
calculating a sum area S2 of a plurality of overall model units each having a real constant serial number consistent with the constant serial number of the sub-model unit;
multiplying the integral load effect of the target overall model unit by a transfer coefficient (S₂/ S₁) and transmitting the product to the sub-model unit.

Preferably, the apparatus for transferring grid data of a finite element model for nuclear island structure also includes:
a combining module for combining original local load effect of the sub-model unit with the overall load effect to obtain a combined load effect, and performing structural designing according to the combined load effect.

A third embodiment of the present invention provides a device for transferring grid data of a finite element model for a nuclear island structure including a memory having a computer program stored therein and a processor, and the computer program can be executed by the processor to perform the method for transferring grid data of a finite element model for nuclear island structure as described above.

A fourth embodiment of the present invention provides a computer readable storage medium, the computer readable storage medium has a computer program stored therein, the computer program can be executed by a processor of the device in which the storage medium is located, to perform the method for transferring grid data of a finite element model for nuclear island structure as described above.

Illustratively, each process of the embodiments of the present invention may be accomplished by executing executable code by a processor, the executable code may be divided into one or more modules, and the one or more modules are stored in the memory and executed by the processor to complete the present invention.

The processor can be a central processing unit (CPU) , or general-purpose processor, digital signal processor (DSP) , application specific integrated circuit (ASIC), field-programmable gate arrays (FPGA) or other programmable logic device, discrete gates or transistor logic devices, discrete hardware components. A general-purpose processor can be a microprocessor or any regular processor.

The memory may be used to store the computer program and/or module. The processor can realize various functions of the platform by running or executing the computer program and/or module stored in the memory, and calling the data stored in the memory. The memory can mainly include a storage program area and a storage data area, wherein the storage program area can store an operating system. The storage data area can store data created based on usage (such as audio data, text message data). In addition, the memory may include high-speed random-access memory, and non-volatile random-access memory, such as a hard disk, memory, plug-in hard disk, smart media card (SMC), secure digital (SD) card, flash card, at least one disk storage device, flash memory device, or other volatile solid state storage device.

The realized module can be stored in a computer readable storage medium if it is in form of a software function unit and sold or used as an independent product. Based on the understanding, the present invention realizes all or part of the flow in the embodiment, and can also be completed by a computer program to instruct related hardware, the computer program can be stored in a computer readable memory medium, and the steps of each embodiment can be realized when the computer program is executed by a processor. The computer program includes computer program code, which may be in the form of source code, object code, executable file, or intermediate form. The computer readable medium may include any entity or device capable of carrying the computer program code, a recording medium, a U disk, a removable hard disk, a disk, an optical disk, a computer memory, a read-only memory (ROM) , a random-access memory (RAM), a telecommunications signal, an electrical carrier signal, a software distribution medium . It should be noted that, the contents of the computer-readable media may be added to or subtracted according to the requirements of legislation and patent practice in jurisdictions. For example, in some jurisdictions, according to legislation and patent practice, computer-readable media do not include telecommunication signals electrical and carrier signals.

It should be noted that, the embodiments described above are only illustrative, wherein the units described as separate parts may or may not be physically separated, the parts displayed as units may or may not be physical units, either located in one place or distributed over a number of network units. Some or all of the modules can be selected to realize the objects of the embodiment according to the actual requirements. In addition, the connection relationship between modules in the device according to the embodiment of the present invention indicates that there is communication connection between the modules, which can be one or more communication buses or signal lines. One ordinary skilled in the art can understand and implement without creative work.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A method for transferring grid data of a finite element model for a nuclear island structure, **characterized in that**, the method for transferring grid data of a finite element model for a nuclear island structure comprises the steps of:
S101, generating a sub-model according to localized objects to be detailly designed and components connected to the localized objects within a certain range, in which the sub-model is a finite element model with a first unit grid size;
S102, acquiring data of an overall model in which the sub-model is located, wherein the overall model is a finite element model established with a second unit grid size larger than the first unit grid size,
and the data of the overall model comprises an integral load effect of each overall model unit of the overall model;
S103, for each sub-model unit in the sub-model, acquiring a real constant serial number of each sub-model unit, and a plurality of overall model units having real constant serial numbers consistent with the real constant serial number of each sub-model unit in the overall model;
S104, determining a target overall model unit according to distances between the sub-model unit and centroid points of the plurality of overall model units; and
S105, transferring the integral load effect of the target overall model unit to the corresponding sub-model unit.

2. The method for transferring grid data of a finite element model for a nuclear island structure according to claim 1, **characterized in that**, the step of determining a target overall model unit according to distances between the sub-model unit and centroid points of the plurality of overall model units comprises the step of:
calculating the distances between the sub-model unit and the centroid points of the plurality of overall model units respectively, and taking the overall model unit closest to the centroid points as the target overall model unit.

3. The method for transferring grid data of a finite element model for a nuclear island structure according to claim 1, **characterized in that** the step of transferring the integral load effect of the target overall model unit to the corresponding sub-model unit comprises the steps of:
calculating a sum area S1 of a plurality of sub-model units each having a real constant serial number consistent with the constant serial number of the sub-model unit;
calculating a sum area S2 of a plurality of overall model units each having a real constant serial number consistent with the constant serial number of the sub-model unit; and
multiplying the integral load effect of the target overall model unit by a transfer coefficient (S₂/ S₁) and transmitting the product to the sub-model unit.

4. The method for transferring grid data of a finite element model for a nuclear island structure according to claim 1, **characterized in that**, after transferring the integral load effect of the target overall model unit to the corresponding sub-model unit, the method for transferring grid data of a finite element model for a nuclear island structure further comprises the step of:
combining original local load effect of the sub-model unit with the overall load effect to obtain a combined load effect, and performing structural designing according to the combined load effect.

5. An apparatus for transferring grid data of a finite element model for a nuclear island structure, **characterized in that**, the apparatus for transferring grid data of a finite element model for a nuclear island structure comprises:
a sub-model generating module (210) for generating a sub-model according to localized objects to be detailly designed and components connected to the localized objects within a certain range, wherein the sub-model is a finite element model with a first unit grid size;
an overall model acquiring module (220) for acquiring data of an overall model in which the sub-model is located, wherein the overall model is a finite element model established with a second unit grid size larger than the first unit grid size, and the data of the overall model comprises an integral load effect of each overall model unit of the overall model;
an overall model units acquiring module (230) for acquiring a real constant serial number of each sub-model unit in the sub-model, and a plurality of overall model units having real constant serial numbers consistent with the real constant serial number of each sub-model unit in the overall model;
a distance determining module (240) for determining a target overall model unit according to distances between the sub-model unit and centroid points of the plurality of overall model units; and
a data transferring module (250) for transferring the integral load effect of the target overall model unit to the corresponding sub-model unit.

6. The apparatus for transferring grid data of a finite element model for a nuclear island structure according to claim 5, **characterized in that** the distance determining module (240) is used for:
calculating the distances between the sub-model unit and the centroid points of the plurality of overall model units respectively, and taking the overall model unit closest to the centroid points as the target overall model unit.

7. The apparatus for transferring grid data of a finite element model for a nuclear island structure according to claim 5, **characterized in that** the data transferring module (250) is used for:
calculating a sum area S1 of a plurality of sub-model units each having a real constant serial number consistent with the constant serial number of the sub-model unit;
calculating a sum area S2 of a plurality of overall model units each having a real constant serial number consistent with the constant serial number of the sub-model unit; and
multiplying the integral load effect of the target overall model unit by a transfer coefficient (S₂/ S₁) and transmitting the product to the sub-model unit.

8. The apparatus for transferring grid data of a finite element model for a nuclear island structure according to claim 5, **characterized in that** the apparatus for transferring grid data of a finite element model for a nuclear island structure further comprises:
a combining module for combining original local load effect of the sub-model unit with the overall load effect to obtain a combined load effect, and performing structural designing according to the combined load effect.

9. The apparatus for transferring grid data of a finite element model for a nuclear island structure according to claim 5, **characterized in that** the sub-model is a collection of components in a local scope of the overall model in geometric space.

10. A device for transferring grid data of a finite element model for a nuclear island structure, **characterized in that** the device for transferring grid data of a finite element model for a nuclear island structure comprises a memory having a computer program stored therein and a processor, and the computer program can be executed by the processor to perform the method for transferring grid data of a finite element model for a nuclear island structure of anyone of claims 1 to 4.
